# EUROPEAN PATENT SPECIFICATION

(11) **EP 1 815 751 B1**
(45) Date of publication and mention of the grant of the patent: **05.05.2010**
(21) Application number: 07250294.1
(22) Date of filing: 24.01.2007
(51) Int. Cl.: A23K 1/18, A23K 1/16, A23K 1/14

(54) **Bird Feed**
Vogelfutter
Aliment pour oiseaux

(30) Priority: 01.02.2006 GB 0601991
(43) Date of publication of application: 08.08.2007
(73) Proprietor: C J Wildbird Foods Limited, Shrewsbury SY4 4UR (GB)
(72) Inventor: Whittles, Christopher, Shrewsbury SY2 6QS (GB)
(74) Representative: Barnfather, Karl Jon

(56) References cited:
- EP-A2- 0 766 923
- CA-A1- 2 122 665
- GB-A- 1 428 181

## Description

The present invention relates to a new bird food and a method of manufacturing a new bird food.

A variety of different types of wild bird food are available for sale. These typically include straight foods, peanuts, seed mixtures, and live foods. Straight foods include single seed varieties such as Nyjer seed. Feeds high in oil content are capable of providing high energy feeds and are particularly valuable for all year round use. Seed mixes are the most popular means of feeding wild birds, and may also contain additional foods such as nuts.

While known high energy feeds are capable of providing increased energy needs of many birds during the breeding and Winter periods some birds; such as Starlings and those of the Thrush family; do not find these feeds particularly appealing and much prefer natural foods such as soil invertebrates. Unfortunately, such natural food is scarce, especially during the breeding season and Winter; a fact that has in recent years led to a significant decrease in migration of such birds to countries such as the UK.

An objective of the present invention is to provide a nutritious feed that is appealing to threatened wild bird species such as Starlings and the Thrush family and that is suitable for outdoor use.

EP-A-766923 discloses a wild bird food comprising a mixture of fat and peanut flour. GB-A-142181 discloses a palletised bird food containing cereal flours and soya.

In one aspect the invention comprises a method of manufacturing bird food agglomerates comprising the following steps: (a) Preparing a basic powdered feed mixture containing cereals admixed with Soya or Soya extracts; (b) Agglomerating said basic powdered feed to produce agglomerates with an average volume of less than 200 mm³; (c) adjusting the proportion of cereals and Soya or Soya extract in step (a) such that the protein content of the agglomerated product is in the range 31 to 45 % by weight.

The protein content of the agglomerates may be further increased by the addition of substantially pure amino acid or mixture of amino acids to the basic powdered feed mixture prepared in step (a).

Preferably, fat is homogeneously admixed with the basic powdered feed both to assist agglomeration and also to confer a degree of water resistance to the surface of the agglomerates. The agglomeration step may use a pan/disc pelletizer; a rotary drum, or a pin mixer (all similar to those supplied by Feeco International, Inc., Wisconsin, USA). Alternatively, the agglomeration step may comprise extrusion. Preferably between 5 and 20 % by weight fat (in the final product) is added.

In another aspect the invention comprises a method of manufacturing bird food agglomerates comprising the following steps: (a) Preparing a basic powdered feed mixture containing cereals admixed with Soya or Soya extracts; (b) Agglomerating said basic powdered feed to produce agglomerates with an average volume less than 200 mm³; (c) Applying a water resistant coating to said agglomerates; (d) adjusting the proportion of cereals and Soya or Soya extract in step (a) such that the protein content of the coated agglomerated product is in the range 31 to 45 % by weight.

Preferably, the basic powdered feed is agglomerated by extrusion following the addition of a binder. Preferably, the binder comprises 2 to 8 % by weight (in the final product) of oil and or fat in combination.

Step (c) may further comprise admixing the agglomerates with liquid fat; for example spraying liquid tallow onto a moving inventory of agglomerates or using an auger screw mixer. The agglomerates may be cooled during the coating step using cooling air. In addition, a substance such as flour may be deposited over the surface of the coated agglomerates in order to help prevent individual agglomerates sticking to one another. Preferably, between 10 and 20 % by weight (in the final product) of fat is added. Preferably, between 2 and 8 % by weight of flour (in the final product) is added. The pellets may be coated first with fat using an auger mixer; fat being metered at a first point along the auger and flour (optionally) being metered at a second point downstream of said first point. The auger preferably comprises two parallel helicoidal screws made of soft fibres that rotate in a 8-shaped trough.

In another aspect the invention comprises a bird feed having individual agglomerates with an average size of less than 200 mm³ said agglomerates containing particles, of cereal admixed with Soya or Soya extracts and wherein the bird food has a protein content in the range 31 to 45 % by weight.

The bird food may also contain 32 to 45%, 32 to 40%, 32 to 35%, 33 to 45%, 33 to 40%, 33 to 45%, 34 to 45%, 34 to 40%, and 35 to 40% protein. Preferably, the average size of agglomerates is in the range 50 to 150 mm³ , and more preferably 75 to 125 mm³.

The cereal component may include; for example, barley, wheat or maize. Preferably, the bird food contains 10 to 31 % by weight wheat; and/or up to 10 % by weight barley; and/or up to 10 % by weight maize. The bird food may further comprises fish meal; preferably between 5 and 10 % by weight.

Preferably, the bird food is agglomerated using extrusion to form pellets of diameter in the range 2.5 to 3.5 mm. Oil and or fat may be added in order to assist pelletisation; preferably between 0.5 and 5 % by weight (in the final product) of oil plus fat being added.

The bird food may also advantageously include addition of selected amino acids; for example methionine may be added at between 0.008 and 0.03 % by weight.

The bird food preferably comprises a water resistant outer coating; for example a fat coating such as tallow. Preferably, between 10 and 20 % by weight (in the final product) of fat is added. In addition, it is desirable to coat the pellets so produced with flour; for example fine wheat flour; preferably between 2 and 8 % by weight (in the final product). The pellets may be coated first with fat and then (optionally) with flour using, for example, an auger mixer; fat being metered at a first point along the auger and flour being metered at a second point downstream of said first point. The auger preferably comprises two parallel helicoidal screws made of soft fibres that rotate in a 8-shaped trough.

The invention will be described by reference to the following Examples.

### Example 1

The basic powdered feed mixture comprised:

| | |
|---|---|
| Cereals | 33.7% |
| Soya | 66.3% |

The powder was agglomerated using extrusion and 5 % by weight of fat in the form of beef tallow was added to act as a binder. The extruded pellets were ca 3mm diameter ant typically 5-15 mm in length. The protein content of the resulting food was 35 % by weight.

### Example 2

The basic powdered feed comprised:

| | |
|---|---|
| Wheat | 29.4 % |
| Soya | 64.7% |
| Fish meal | 5.9 % |

The powder was agglomerated and made water resistant using in total 15 % fat (tallow) addition. Again, the extruded pellets were 2.5 and 3.5 mm diameter and typically 10 mm in length. The protein content of the resulting food was 33.2 % by weight.

### Example 3

The basic powdered feed comprised:

| | |
|---|---|
| Wheat | 27.8 % |
| Soya | 55.6 % |
| Fish meal | 5.6 % |

The powder was agglomerated adding of 5 % fat (tallow) as a binder. The pellets were then coated by adding 10 % by weight fat and 5 % by weight of flour. Again, the extruded pellets were 2.5 and 3.5 mm diameter and typically 10 mm in length. The protein content of the resulting food was 31.6 % by weight.

## Claims

1. A method of manufacturing bird food agglomerates comprising the steps:
(a) Preparing a basic powdered feed mixture containing cereals admixed with Soya or Soya extracts; and **characterised by** the following steps:
(b) Agglomerating said basic powdered feed to produce agglomerates with an average volume of less than 200 mm³;
(c) adjusting the proportion of cereals and Soya or Soya extract in step (a) such that the protein content of the agglomerated product is in the range 31 to 45 % by weight.

2. A method according to Claim 1 comprising the following additional step:
(d) Applying a water resistant coating to said agglomerates.

3. A method according to Claim 1 or 2 wherein fat is homogeneously admixed with the basic powdered feed both to assist agglomeration and also to confer a degree of water resistance to the surface of the agglomerates.

4. A method according to Claim 2 or 3 wherein the agglomerates are cooled during the coating step using cooling air.

5. A method according to any preceding claim wherein the basic powdered feed is agglomerated by extrusion following the addition of a binder.

6. A method according to Claim 5 wherein the binder comprises 0.5 to 5 % by weight of oil and or fat in combination.

7. A method according to any of Claims 2 to 6 wherein step (d) comprises spraying a hot mixture of fat and flour onto a moving inventory of agglomerates.

8. Bird food containing particles, of cereal admixed with Soya or Soya extracts; **characterised in that** the food comprises individual agglomerates of said particles with an average size of less than 200 mm³ and wherein the bird food has a protein content in the range 31 to 45% by weight.

9. Bird food according to Claim 8 comprising a water resistant outer coating.

10. Bird food according to Claim 9 wherein the water resistant outer coating comprises a fat; preferably tallow.

## Patentansprüche

1. Ein Verfahren zum Herstellen von Vogelfutter-Agglomeraten, umfassend die Verfahrensschritte:
(a) Vorbereiten einer gemahlenen Mischung von Basisfutter, bestehend aus Getreide mit Beimengungen von soja oder Sojaextrakten, und **gekennzeichnet durch** die folgenden Verfahrensschritte:
(b) Agglomerieren der vorgenannten gemahlenen Mischung von Basisfutter zu Agglomeraten, mit einem Durchschnittsvolumen von weniger als 200 mm³,
(c) Einstellen des Mengenverhältnisses von Getreide und Soja oder Sojaextrakt gemäß Verfahrensschritt (a) so dass der Anteil von Proteinen in dem agglomerierten Produkt in einem Bereich von 31 bis 45 Gew./% (Gewichtsprozent) liegt.

2. Ein Verfahren gemäß Anspruch 1, zusätzlich dem folgenden Verfahrensschritt umfassend:
(d) Aufbringen einer Wasser abweisenden Beschichtung auf die vorgenannten Agglomerate.

3. Ein Verfahren gemäß Anspruch 1 oder 2, wobei Fett homogen der Mischung von Basisfutter beigemengt ist, um die Agglomeration zu unterstützen, und um einen gewissen Grad der Wasserabweisung der Oberflächenbeschichtung der Agglomerate zu gewährleisten.

4. Ein Verfahren gemäß Anspruch 2 oder 3, wobei die Agglomerate während des Verfahrensschrittes der Beschichtung mit Kühlluft abgekühlt werden.

5. Ein Verfahren nach einem der vorhergehenden Ansprüche, wobei die Mischung von Basisfutter durch Extrusion unter Verwendung eines zusätzlichen Bindemittels agglomeriert wird.

6. Ein Verfahren gemäß Anspruch 5, wobei das Bindemittel aus 0,5 Gew./% (Gewichtsprozent) Öl und/oder Fett in Kombination gebildet wird.

7. Ein Verfahren gemäß einem der Ansprüche 2 bis 6, wobei der Verfahrensschritt (d) das Aufsprühen von einer heißen Mischung aus Fett und Getreidemehl auf den sich bewegenden Vorrat an Agglomeraten umfasst.

8. Vogelfutter enthaltende Partikel, bestehend aus Getreide mit Soja oder Sojaextrakten, **dadurch gekennzeichnet, dass** das Futter aus einzelne Agglomeraten gebildet wird, die aus den vorgenannten Partikeln, mit einer durchschnittlichen Größe von weniger als 200mm³ bestehen, und der Anteil an Proteinen im Vogelfutter in einem Bereich von 31 bis 45 Gew./% (Gewichtsprozent) liegt.

9. Vogelfutter gemäß Anspruch 8 mit einer Wasser abweisenden Beschichtung.

10. Vogelfutter gemäß Anspruch 9, wobei die Wasser abweisende äußere Beschichtung aus Fett, vorzugsweise aus Talg gebildet wird.

## Revendications

1. Procédé de fabrication d'agrégats de nourriture pour oiseaux comprenant l'étape de :
(a) préparation d'un mélange de base d'aliments en poudre contenant des céréales mélangées à du soja ou à des extraits de soja,
et **caractérisé par** les étapes suivantes :
(b) agrégation desdits aliments de base en poudre pour former des agrégats d'un volume moyen inférieur à 200 mm³ ;
(c) ajustement de la proportion de céréales, de soja ou d'extrait de soja de l'étape (a) de sorte que la teneur en protéines du produit aggloméré soit comprise entre 31 et 45% en poids.

2. Procédé selon la revendication 1, comprenant l'étape supplémentaire suivante :
(d) application d'un revêtement résistant à l'eau sur lesdits agrégats.

3. Procédé selon la revendication 1 ou 2, dans lequel de la graisse est mélangée de manière homogène aux aliments de base en poudre pour faciliter l'agrégation et pour également conférer un degré de résistance à l'eau à la surface des agrégats.

4. Procédé selon la revendication 2 ou 3, dans lequel les agrégats sont refroidis au cours de l'étape de l'application de l'enduit en utilisant de l'air de refroidissement.

5. Procédé selon l'une quelconque des revendications précédentes, dans lequel les aliments de base en poudre sont agglomérés par extrusion suivie de l'ajout d'un liant.

6. Procédé selon la revendication 5, dans lequel le liant comprend de 0,5 à 5 % en poids d'huile et/ou de graisse en combinaison.

7. Procédé selon l'une quelconque des revendications 2 à 6, dans lequel l'étape (d) comprend la pulvérisation d'un mélange chaud de graisse et de farine sur des agrégats en déplacement.

8. Nourriture pour oiseaux contenant des particules de céréales mélangées à du soja ou à extraits de soja, **caractérisée en ce que** la nourriture comprend des agrégats individualisés desdites particules de taille moyenne inférieure à 200 mm³ et dans laquelle la nourriture pour oiseaux présente une teneur en protéines comprise entre 31 et 45% en poids.

9. Nourriture pour oiseaux selon la revendication 8, comportant un revêtement externe résistant à l'eau.

10. Nourriture pour oiseaux selon la revendication 9, dans laquelle le revêtement externe résistant à l'eau comprend de la graisse, de préférence du suif.
